# EUROPÄISCHE PATENTSCHRIFT

(11) **EP 2 647 588 B1**
(45) Veröffentlichungstag und Bekanntmachung des Hinweises auf die Patenterteilung: **12.11.2014**
(21) Anmeldenummer: 13158288.4
(22) Anmeldetag: 08.03.2013
(51) Int. Cl.: B65G 19/02, B65G 47/61, B65G 47/88

(54) **Staustrecke für eine Förderanlage sowie derartige Förderanlage**
Buffer section for a conveying system as well as conveying system of this type
Zone d'accumulation pour installation de transport ainsi que l' installation de transport de ce type

(30) Priorität: 05.04.2012 DE 102012205735
(43) Veröffentlichungstag der Anmeldung: 09.10.2013
(73) Patentinhaber: Dürkopp Fördertechnik GmbH, 33703 Bielefeld (DE)
(72) Erfinder: Wend, Michael, 33619 Bielefeld (DE); Schwan, Andreas, 33605 Bielefeld (DE); Johannesmann, Thomas, 33719 Bielefeld (DE)
(74) Vertreter: Rau, Schneck & Hübner Patentanwälte Rechtsanwälte PartGmbB

(56) Entgegenhaltungen:
- EP-A1- 0 700 849
- DE-A1- 3 737 484
- DE-A1- 4 010 231
- DE-U1- 8 433 582
- DE-U1- 9 302 371
- DE-U1- 29 804 038
- US-A- 3 799 395

## Beschreibung

Der Inhalt der deutschen Patentanmeldung DE 10 2012 205 735.8 wird durch Bezugnahme hierin aufgenommen.

Die Erfindung betrifft eine Staustrecke für eine Förderanlage in einem Hochregallager sowie eine derartige Förderanlage.

Aus der DE 40 28 388 A1 und aus der US 6,439,366 B1 sind Förderanlagen zur Handhabung von Fördergut bekannt.

Aus der EP 2 130 789 A1 ist eine Anlage zum Be- und Entladen von Hochregalen mit hängendem Fördergut bekannt. Das Fördergut ist mittels eines Hakens beispielsweise eines Bügels an einer Förderschiene aufgehängt und wird in der Förderanlage gefördert. Bevor das Fördergut in die Be- und Entladestation übergeben wird, erfolgt eine Bereitstellung einer mehrere Fördergüter umfassenden Fördergutgruppe mittels einer sogenannten Staustrecke, die als eine geneigte Stange ausgeführt ist. Bei einer großen Neigung der Stange und besonders schwerem Fördergut kann dieses gestaucht, also verdichtet werden. Beim Entnehmen der Fördergutgruppe aus der Staustrecke wird die Verdichtung aufgehoben und es ergibt sich ein erhöhter Platzbedarf, da das Fördergut nicht mehr gestaucht ist. Bei einer geringen Neigung der Stange besteht die Gefahr, dass das Fördergut nicht zuverlässig gefördert wird. Um ein Stauen des Förderguts in der Staustrecke zu ermöglichen, ist ein Stopperelement in Form eines Riegels an der Stange vorgesehen, der die Haken aufhält und an einem weiteren Rutschen entlang der Stange hindert. Aufgrund des Eigengewichts schwenkt Fördergut um Riegel an der Stange. Es ergibt sich eine im Wesentlichen fächerartige Anordnung der einzelnen Fördergüter, wobei deren Haken im Bereich des Riegels aneinander anliegen und deren untere, der Stange abgewandte Enden aufgefächert, also insbesondere maximal beabstandet sind. Die Handhabung derart gruppierten Förderguts ist aufwendig und kompliziert.

Aus der DE 40 10 231 A1 ist eine Vorrichtung mit einer Gleitstange bekannt. An der Gleitstange ist eine Separiereinrichtung mittels eines an der Gleitstange befestigten Kontakts vorgesehen, um die an der Gleitstange entlang gleitenden Kleiderbügel aufzuhalten. Zusätzlich kann eine Barriere vorgesehen sein, um ein Pendeln der Kleidungsstücke an dem Kontakt zu vermeiden. Eine derartige Vorrichtung ist aufwändig und umfasst eine Vielzahl von Komponenten, die insbesondere separat angesteuert werden müssen. Die Ausführung und Handhabung einer derartigen Vorrichtung ist komplex und kostenaufwändig.

Weitere Gleitstangen-Vorrichtungen mit einer daran angeordneten Separiereinrichtung sind beispielsweise bekannt aus der EP 0 700 849 A1, der US 3 799 395, der DE 93 02 371 U1, der DE 37 37 484 A1, der DE 298 04 038 U1 und der DE 84 33 582 U1.

Der Erfindung liegt die Aufgabe zugrunde, eine Staustrecke für eine Förderanlage in einem Hochregallager bereitzustellen, die eine automatische und zuverlässige Gruppierung von mehreren, also mindestens zwei, Fördergütern zu einer Fördergutgruppe ermöglicht, wobei insbesondere eine parallele, insbesondere vertikale, Anordnung der Fördergüter innerhalb der Fördergutgruppe gewährleistet ist.

Diese Aufgabe wird erfindungsgemäß durch die Merkmale im Anspruch 1 gelöst. Erfindungsgemäß wurde erkannt, dass mittels eines eine Anlagefläche aufweisenden Stopperelements Fördergut in vorteilhafter Weise parallel zueinander und insbesondere vertikal hängend gestaut werden kann. Das Stopperelement ist zwischen einer Stopperanordnung und einer Passieranordnung verlagerbar. In der Stopperanordnung ist das Stopperelement entlang einer Förderrichtung angeordnet, so dass das Fördergut an einer Verlagerung entlang der Förderrichtung vorbei an dem Stopperelement gehindert ist. In der Stopperanordnung dient das Stopperelement zum Stoppen der Fördergüter. Das Stopperelement befindet sich in einer geschlossenen Position. In der Passieranordnung ist das Stopperelement aus der Förderstrecke entfernt, also nicht in einem Förderweg entlang der Förderrichtung angeordnet. Das Fördergut kann in der Passieranordnung das, insbesondere seitlich neben der Staustrecke angeordnete, Stopperelement passieren. Das Stopperelement befindet sich in einer geöffneten Position. In der Passieranordnung dient das Stopperelement zum Durchlassen der Fördergüter. Insbesondere ist die Anlagefläche zumindest in einem unteren Bereich des Förderguts angeordnet. Dadurch ist ausgeschlossen, dass das Fördergut unbeabsichtigt schief entlang der Staustrecke angeordnet ist. Als unterer Bereich des Förderguts wird insbesondere ein Flächenbereich verstanden, die sich ausgehend von einem unteren Ende des Förderguts über mindestens 30%, insbesondere mindestens 40% und insbesondere mindestens 50% einer Höhe des Förderguts erstreckt. Die Anlagefläche kann sich aber auch über den gesamten Bereich des Förderguts erstrecken. Die Rutschstange ist entlang der Staustrecke gegenüber der Horizontalen geneigt und ermöglicht ein rutschendes Fördern der hängenden Fördergüter längs eines Förderwegs. Das Stopperelement ist im Förderweg am Ende zumindest eines Abschnitts der Rutschstange angeordnet. Das Fördergut ist mittels eines Hakens beispielsweise eines Bügels an der Rutschstange aufgehängt. Insbesondere ist das Fördergut Kleidung oder andere Ware. Die Fördergüter, also mindestens zwei, werden entlang der Staustrecke zu einer Fördergutgruppe gestaut. Die Fördergutgruppe wird auch als Block bezeichnet. Dadurch, dass zum Stoppen der Fördergüter ausschließlich das Stopperelement dient, ist der Aufbau der Staustrecke insgesamt vereinfacht. Insbesondere ist es nicht erforderlich, mehrere Komponenten vorzusehen, um ein Stoppen der Fördergüter zuverlässig zu garantieren. Der Aufbau der Staustrecke ist insbesondere gegenüber der aus der DE 40 10 231 A1 bekannten Vorrichtung vereinfacht. Die Handhabung der Staustrecke ist vereinfacht. Insbesondere ist es ausreichend, nur ein einziges Stopperelement zu betätigen, um das Stoppen der Fördergüter zu gewährleisten.

Eine Staustrecke nach Anspruch 2 ermöglicht ein verbessertes Anliegen des Förderguts an dem Stopperelement. Die Stopperfunktion ist verbessert. Insbesondere eine vertikale Anordnung des Stopperelements ermöglicht eine vorteilhafte Bereitstellung des Förderguts vertikal hängend.

Eine Staustrecke nach Anspruch 3 vereinfacht die Verlagerung des Stopperelements zwischen der Stopperanordnung und der Passieranordnung. Es ist möglich, dass das Stopperelement als Einflügeltür ausgeführt ist, die seitlich schwenkbar ist. Es ist auch möglich, eine Zweiflügeltür vorzusehen, wobei beide Flügel vorzugsweise identisch ausgeführt sind. Der Platzbedarf für das Verschwenken ist reduziert. Die Schwenkachse kann insbesondere vertikal orientiert und seitlich neben der Staustrecke angeordnet sein. Es ist auch möglich, dass die Schwenkachse horizontal und senkrecht zur Förderrichtung orientiert ist. Es ist auch denkbar, eine ein- oder zeiteilige Schiebetür als Stopperelement vorzusehen. Bei einer Schiebetür ist der Platzbedarf insbesondere entlang der Förderrichtung zusätzlich reduziert.

Bei einer Straustrecke nach Anspruch 4 ist das Stopperelement nicht direkt an der Rutschstange beispielsweise als Riegel angeordnet. Das Stopperelement kommt mit dem Fördergut im Bereich eines unteren Endes und insbesondere nicht im Bereich des Hakens in Kontakt. Das Stoppen des Förderguts wird also nicht durch ein Stoppen des Hakens an der Stange, sondern durch ein flächiges Anliegen des Förderguts an der der Anlagefläche gewährleistet. Der Abstand des Stopperelements von der Rutschstange kann angepasst an die jeweils zu fördernden Fördergüter gewählt werden. Soweit Fördergüter mit unterschiedlichen Abmessungen, zum Beispiel geringer hängende und länger hängende Kleidungsstücke, gefördert werden, hat das Stopperelement zumindest einen Stopperbereich, der der Rutschstange benachbart ist.

Eine Staustrecke nach Anspruch 5 weist eine verbesserte Förderfunktion auf. Es ist ein Antriebselement zum Antreiben der Rutschstange vorgesehen. Dadurch, dass die Rutschstange geneigt ist, wird ein selbsttätiges Gleiten der Fördergüter gefördert.

Eine Staustrecke nach Anspruch 6 führt zu einer verbesserten Förderung des Förderguts entlang der Rutschstange. Dadurch, dass das Fördergut entlang der angetriebenen Rutschstange rutscht bzw. gleitet, ist Gleitreibung und nicht Haftreibung gegeben. Der Gleitreibkoeffizient ist im Allgemeinen kleiner als der Haftreibkoeffizient, sodass das Antriebselement dadurch ein Rutschen des Förderguts auf der Stange und somit die Reduzierung des Reibkoeffizienten begünstigt. Das Antriebselement kann beispielsweise als Drehantrieb oder als Schwingungsantrieb ausgeführt sein und ermöglicht eine unkomplizierte und einfache Ausführung des Antriebselements.

Eine Staustrecke nach Anspruch 7 ermöglicht ein zuverlässiges Stoppen der Fördergüter. Die Staustrecke ist robust ausgeführt und insbesondere dauerhaft belastbar. Dadurch, dass das Stopperelement in der Stopperanordnung, insbesondere mechanisch, verriegelt ist, ist eine zuverlässige Stoppbedingung für die Fördergüter gewährleistet. Insbesondere aufgrund des zu erwartenden Dauerbetriebs einer derartigen Staustrecke ermöglicht eine mechanische Verriegelung aufgrund einer hohen mechanischen Belastbarkeit Vorteile gegenüber anderen, nicht mechanischen Verriegelungen.

Eine Staustrecke nach Anspruch 8 gewährleistet die Überwachung einer Länge der Fördergutgruppe entlang der Rutschstangenlängsachse. Dadurch ist es möglich, dass Fördergutgruppen identischer Länge bereitgestellt werden können. Dadurch ist es möglich, dass die Kapazität des Hochregallagers sehr gut genutzt werden kann, indem jede Fördergutgruppe einen zugewiesenen Stauraum auslastet.

Bei einer Staustrecke nach Anspruch 9 weist die Vermessungseinheit eine Zähleinheit zum Zählen der Fördergüter auf. Dabei kann eine Fördergutgruppe ausschließlich identisches Fördergut, aber auch sich unterscheidendes Fördergut aufweisen.

Bei einer Staustrecke nach Anspruch 10 weist die Vermessungseinheit zusätzlich eine Identifiziereinheit auf, die insbesondere mit einer Steuereinrichtung in Signalverbindung steht. Dadurch ist es möglich, durch das Identifizieren des Förderguts unmittelbar Daten zu dem Fördergut, insbesondere dessen Masse oder Einzellänge entlang der Rutschstangenlängsachse, zu detektieren.

Bei einer Staustrecke nach Anspruch 11 weist die Vermessungseinheit insbesondere ausschließlich einen Sensor auf, der die Lage bzw. Position des Förderguts an der Rutschstange erfasst. Alternativ ist eine Ausführung der Vermessungseinheit auch mit zwei oder mehr Sensoren möglich, die beispielsweise verschiedene Messbereiche längs eines Förderwegs der Fördergüter abdecken.

Eine Staustrecke nach Anspruch 12 weist einen besonders geeigneten Neigungswinkel der Rutschstange auf, der klein genug ist, damit das Fördergut nicht verdichtet wird, und der groß genug ist, dass ein Rutschen des Förderguts entlang der Rutschstange gewährleistet ist. Sofern ein Antreiben der Rutschstange vorgesehen ist, kann der Neigungswinkel vergleichsweise geringer gewählt werden, da der Antrieb das Förderverhalten begünstigt. Es ist vorteilhaft, wenn das einzelne Fördergut aneinander und insbesondere dicht aneinander anliegt. Dazu ist ein Anlagedruck vorteilhaft. Jedoch soll der Anlagedruck nicht zu einer Stauchung des Förderguts führen, da sonst der Block, nachdem der Anlagedruck nicht mehr anliegt, expandieren würde. Eine Lagerung im Hochregallager wäre dann nicht mehr ohne Weiteres möglich. Insbesondere wäre der Platzbedarf im Hochregal kaum vorhersagbar. Der Anlagedruck der Waren hängt einerseits von der Neigung der Rutschstange und andererseits von der Masse der Einzelwaren ab. Ein überhöhter Anlagedruck kann mit der vorliegenden Staustrecke vermieden werden. Eine gering geneigte Rutschstange ist unproblematisch, da die Gefahr, dass die Ware aufgrund geringer Neigung nicht rutscht und die Förderfunktion der Staustrecke beeinträchtigt ist, durch die Verwendung des Antriebselements zum Antreiben der Rutschstange eliminiert ist.

Eine Staustrecke nach Anspruch 13 ermöglicht das Stoppen der Fördergüter mit einer definierten Schließkraft. Dazu weist das Stopperelement in der Stopperanordnung eine entgegen der Förderrichtung orientierte Schließkraft von mindestens 80 N, insbesondere mindestens 100 N und insbesondere im Bereich von 100 N bis 150 N auf.

Eine Förderanlage nach Anspruch 14 umfasst eine erfindungsgemäße Staustrecke. Die Vorteile der Förderanlage entsprechen denen der Staustrecke, worauf hiermit verwiesen wird.

Eine Förderanlage nach Anspruch 15 ermöglicht einen verbesserten Weitertransport des Förderguts von der Rutschstange der Staustrecke zu der Abführstange.

Weitere Vorteile, Merkmale und Einzelheiten der Erfindung ergeben sich aus der nachfolgenden Beschreibung eines Ausführungsbeispiels anhand der Zeichnung. Es zeigt:

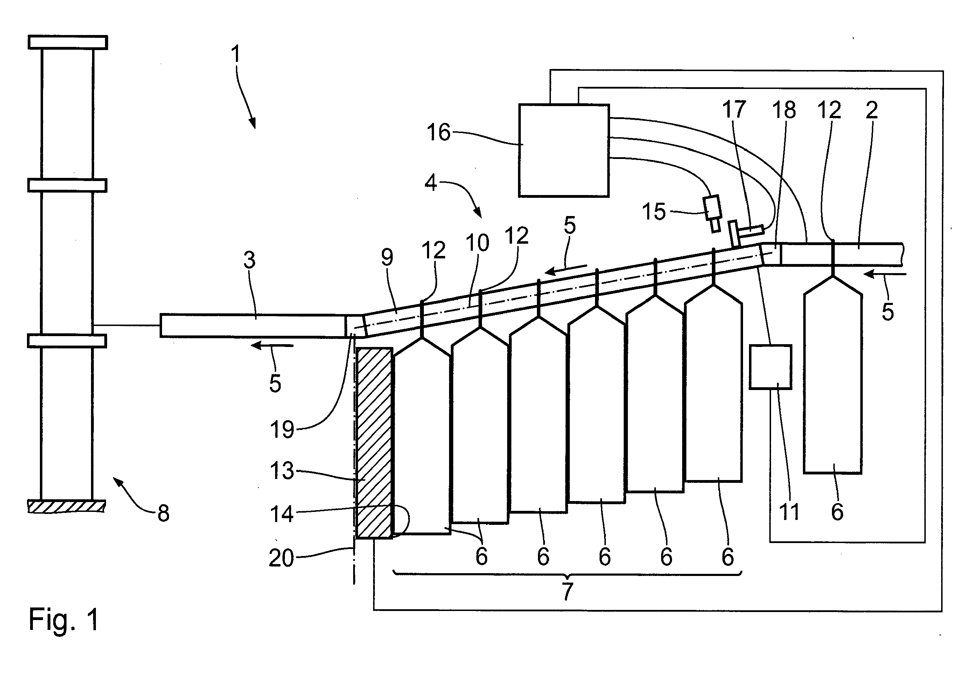

- Fig. 1: eine vereinfachte, schematische Seitenansicht einer Förderanlage mit einer erfindungsgemäßen Staustrecke.

Die in Fig. 1 gezeigte Förderanlage 1 umfasst eine Zuführstange 2, eine Abführstange 3 und eine zwischen der Zuführstange 2 und der Abführstange 3 angeordnete Staustrecke 4. Eine Förderrichtung 5 ist jeweils parallel zu den Stangen 2, 3 oder der Staustrecke 4 orientiert. Die Zuführstange 2 dient zum Zuführen von hängendem Fördergut 6. Entlang der Staustrecke 4 wird das Fördergut 6 zu einer Fördergutgruppe 7 angeordnet. Die Fördergutgruppe 7 wird auch als Block bezeichnet. Das Bilden eines Blockes innerhalb der Staustrecke 4 erfolgt automatisch. Gleichzeitig ist gewährleistet, dass jeder Block eine identische Länge entlang der Förderrichtung 5 aufweist. Der Block wird an die Abführstange 3 abgeführt. Anschließend wird der Block von der Abführstange 3 in ein Hochregal 8 transportiert und dort gelagert. Dies kann beispielsweise, wie in der EP 2 130 789 A1, dadurch erfolgen, dass der Block mittels eines Regal-Bedien-Geräts autonom in dem Hochregal 8 eingelagert wird. Es ist auch möglich, dass das Einlagern des Blocks in das Hochregal 8 in einer anderen Weise erfolgt.

Im Folgenden wird der Aufbau der Staustrecke 4 näher erläutert. Die Staustrecke 4 umfasst eine gegenüber der Horizontalen geneigte Rutschstange 9, die eine Rutschstangenlängsachse 10 aufweist. Der Neigungswinkel der Rutschstange gegenüber der Horizontalen beträgt zwischen 2° und 20°, insbesondere zwischen 2° und 16°, insbesondere zwischen 5° und 15° und insbesondere zwischen 8° und 12°. Die Rutschstange 9 weist eine glatte Zylindermantelfläche auf. Es ist alternativ denkbar, dass die Rutschstange 9 als Spindel mit einem Außengewinde ausgeführt ist. An der Rutschstange 9 ist das Fördergut 6, bei dem es sich um Kleidung handelt, mittels eines Hakens 12 eines Bügels aufgehängt. Das Fördergut 6 wird allgemein auch als Ware bezeichnet. Die Kleidung wird hängend entlang der Förderanlage 1 gefördert. Die Förderrichtung 5 ist im Bereich der Staustrecke 4 parallel zu der Rutschstangenlängsachse 10. Die Förderrichtung 5 ist im Bereich der Zuführstange 2 und im Bereich der Abführstange 3 jeweils parallel zu deren Stangenlängsachsen. Das bedeutet, dass die Förderrichtung 5 bereichsweise verschieden orientiert sein kann.

Weiterhin umfasst die Staustrecke 4 ein Antriebselement 11 in Form eines Drehantriebs. Das Antriebselement 11 ist mit der Rutschstange 9 verbunden und dient zum Antreiben der Rutschstange 9. Das Antriebselement 11 bewirkt also eine Rotation der Rutschstange 9 um die Rutschstangenlängsachse 10, sodass eine Reibung zwischen der Rutschstange 9 und dem Bügel 12 reduziert ist. Dies gilt sowohl für die glatte Oberfläche der Rutschstange 9 als auch die nicht dargestellte Ausführung in Form der Spindel. Alternativ kann das Antriebselement 11 auch als Schwingungsantrieb ausgeführt sein.

Die Staustrecke 4 umfasst weiterhin ein Stopperelement 13, das entlang der Förderrichtung 5 an einem Ende der Staustrecke 4 angeordnet ist. Das Stopperelement 13 dient zum Stoppen der mindestens einen geförderten Ware 6, sodass die Warengruppe 7 gebildet werden kann. Das Stopperelement 13 ist als eine um eine vertikale Schwenkachse 20 schwenkbare Tür ausgeführt, die zwischen einer geschlossenen Stellung, einer so genannten Stopperanordnung, und einer geöffneten Stellung, einer so genannten Passieranordnung, schwenkbar ist. Gemäß Fig. 1 ist die Tür als vollflächig dargestellt, d.h. ihre Höhe in der vertikalen Richtung entspricht im Wesentlichen der Höhe des Förderguts 6. Es ist auch möglich und insbesondere für die Anlagefunktion der Tür 13 nicht hinderlich, wenn die Tür 13 eine reduzierte Höhe von beispielsweise höchstens 70%, insbesondere höchstens 60% und insbesondere höchstens 50% der Höhe des Förderguts aufweist.

In der Darstellung in Fig. 1 ist die Tür 13 in der geschlossenen Stellung angeordnet, das bedeutet, die Fördergüter 6 sind an einer weiteren Förderung entlang der Förderrichtung 5 gehindert und werden an der Tür 13 aufgehalten. Durch Schwenken der Tür, insbesondere um eine vertikal orientierte Schwenkachse 20, wird die Tür in die geöffnete Stellung überführt, sodass die Fördergutgruppe 7 von der Staustrecke 4 zu der Abführstange 3 gefördert werden kann. Es ist auch denkbar, dass die Tür 13 eine Schiebetür ist, die zwischen einer geöffneten und einer geschlossenen Stellung schiebbar ist. In jedem Fall weist die Tür 13 eine Anlagefläche 14 für die Fördergüter 6 zumindest in einem unteren, der Rutschstange 9 abgewandten Bereich des Förderguts 6 auf. Dadurch ist gewährleistet, dass die Fördergüter 6 flächig an der Tür 13 anliegen und parallel zueinander und insbesondere vertikal angeordnet sind. Dadurch ist eine geordnete, parallele Anordnung der Fördergüter 6 entlang der Förderrichtung 5 gewährleistet. Insbesondere kann ausgeschlossen werden, dass die Fördergüter 6 wegen eines an der Rutschstange 9 direkt angebrachten, riegelförmigen Stopperelements mit einer punkt- oder linienförmigen Anlage um diesen Riegel schwenken und eine nicht parallele Anordnung der Fördergüter 6 resultiert. Die Tür 13 ist vertikal orientiert.

Für eine optimale Ausnutzung der von dem Hochregal 8 zur Verfügung gestellten Platz- bzw. Speicherkapazität ist es vorteilhaft, wenn die Fördergutgruppen 7 immer identische Längen entlang der Rutschstangenlängsachse 10 aufweisen. Dazu ist eine Vermessungseinheit 15 in Form eines Sensors 15 vorgesehen. Der Sensor 15 ist derart bezüglich der Rutschstange 9 angeordnet, dass der Sensor detektiert, wenn eine maximal zulässige Länge der Fördergutgruppe 7 erreicht ist. Der Sensor ist mit einer Steuereinheit 16 verbunden, die ihrerseits mit der Zuführstange 2 und einer Mitnehmereinheit 17 verbunden ist. Die Steuereinheit 16 ist auch mit dem Antriebselement 11 verbunden.

Sobald der Sensor die maximal zulässige Länge der Fördergutgruppe 7 detektiert, wird ein entsprechendes Signal an die Steuereinheit 16 übermittelt. Von der Steuereinheit 16 ergeht dann ein Signal an die Zuführstange 2, sodass keine weiteren Fördergüter 6 in die Staustrecke 4 gefördert werden, und ggf. an das Antriebselement 11, sodass der Antrieb der Rutschstange 9 abgeschaltet werden kann.

Die Steuereinheit 16 ist weiterhin mit dem Stopperelement verbunden. Wenn die maximal zulässige Länge der Fördergutgruppe 7 erreicht ist, übermittelt die Steuereinheit 16 ein entsprechendes Signal an das Stopperelement 13, sodass dieses in die geöffnete Stellung verlagert wird. Anschließend wird die Fördergutgruppe 7 von einer Mitnehmereinheit 17 von der Rutschstange 9 der Staustrecke 4 zu der Abführstange 3 mitgenommen. Die Mitnehmereinheit 17 gewährleistet, dass die Fördergutgruppe 7 zuverlässig und sicher von der Rutschstange 9 abgeschoben wird. Die Mitnehmereinheit 17 kann beispielsweise durch einen entlang der Förderrichtung 5 verlagerbaren Schieber ausgeführt sein.

Der Sensor der Vermessungseinheit 15 detektiert die maximal zulässige Länge der Fördergutgruppe 7 insbesondere berührungslos, beispielsweise optisch. Es ist auch möglich, alternativ zu dem Sensor an der Vermessungseinheit 15 eine Zähleinheit zum Zählen der Anzahl der Fördergüter 6 pro Fördergutgruppe 7 vorzusehen. Sofern ausschließlich identisch ausgeführte Fördergüter 6 innerhalb der Staustrecke zu einer Fördergutgruppe 7 angeordnet werden, kann die maximal zulässige Länge der Fördergutgruppe 7 durch eine maximal zulässige Anzahl von Fördergütern 6 ersetzt werden. Da die jeweilige Länge entlang der Förderrichtung 5 der identischen Fördergüter 6 bekannt ist, ist eine direkte Umrechnung von der maximal zulässigen Länge der Fördergutgruppe 7 auf die maximal zulässige Anzahl der Fördergüter 6 direkt und unkompliziert möglich. Für die Bestimmung der Länge der Fördergutgruppe 7 ist lediglich ein Zählen der Fördergüter 6 erforderlich. Dies führt zu einer Vereinfachung des Verfahrens und insbesondere zur Vereinfachung der Systemtechnik. Ein Zählsensor ist einfacher aufgebaut und kostengünstiger als ein Längenmesssensor. Sofern mehrere verschiedene Fördergüter 6 innerhalb der Staustrecke 4 gestaut werden sollen, ist neben der Zähleinheit eine Identifiziereinheit notwendig, um die jeweiligen Fördergüter 6 zu identifizieren. Diese Identifiziereinheit ist ebenso wie die Zähleinheit mit der Steuereinheit 16 verbunden, wobei beispielsweise in einem integrierten Speicher in der Steuereinheit 16 eine jeweilige Länge eines identifizierten Förderguts in einer Datenbank hinterlegt ist. Eine Identifizierung der jeweiligen Fördergüter kann auch im Vorfeld der Förderung der Fördergüter, also vor der Staustrecke 4, geschehen.

Die Zuführstange 2 ist über eine erste Kupplung 18 mit der Rutschstange 9 der Staustrecke 4 verbunden. Die Abführstange 3 ist über eine zweite Kupplung 19 mit der Rutschstange 9 der Staustrecke 4 verbunden. Die Kupplungen 18, 19 sind insbesondere deshalb erforderlich, da die Rutschstange 9 angetrieben ist und die Zuführstange 2 und die Abführstange 3 feststehend angeordnet sind.

Das Stopperelement 13 dient zum Stoppen der Fördergüter 6. Das Stopperelement 13 ist die einzige Komponente, die das Stoppen der Fördergüter 6 ermöglicht. Das bedeutet, dass ausschließlich das Stopperelement 13 zum Stoppen der Fördergüter 6 dient. Es ist insbesondere nicht erforderlich, weitere Komponenten und insbesondere ein Kontaktelement an der Rutschstange 9 vorzusehen, um ein zuverlässiges Stoppen der Fördergüter 6 zu ermöglichen.

Die ausschließliche Verwendung des Stopperelements 13 wird insbesondere dadurch ermöglicht, dass in der Stopperanordnung das Stopperelement 13 verriegelt ist. Diese Verriegelung kann insbesondere mechanisch erfolgen, indem das Stopperelement 13 beispielsweise gegen einen Anschlag verschwenkt wird. Der Anschlag ist insbesondere derart angeordnet, dass ein unbeabsichtigtes Verschwenken des Stopperelements aus der Stopperanordnung heraus beispielsweise in Folge einer Beaufschlagung durch das Eigengewicht von an dem Stopperelement 13 gestoppten Fördergütern zuverlässig ausgeschlossen ist. Es ist auch denkbar, das Stopperelement 13 zusätzlich oder alternativ beispielsweise elektromagnetisch, also berührungslos zu verriegeln.

Das Stopperelement weist in der Stopperanordnung eine entgegen der Förderrichtung 5 orientierte Schließkraft auf. Insbesondere ist möglich, dass die Schließkraft einstellbar ist. Die Schließkraft beträgt mindestens 80 N, insbesondere mindestens 100 N und liegt insbesondere in einem Bereich von 100 N bis 150 N. Diese Schließkraft ist ausreichend, um die zu erwartenden Belastungen von Fördergütern 6, die entlang der Rutschstange 9 gegen das Stopperelement 13 rutschen, zuverlässig aufzuhalten. Gleichzeitig ist die Schließkraft derart ausgelegt, dass diese mittels eines Aktors bereitgestellt werden kann. Ein derartiger Aktor kann beispielsweise ein Hydraulik- oder Pneumatikzylinder sein. Es können auch elektromotorische Aktoren verwendet werden. Es ist auch ein Spindeltrieb denkbar.

## Patentansprüche

1. Staustrecke für eine Förderanlage in einem Hochregallager, wobei die Staustrecke (4) umfasst
a) eine gegenüber der Horizontalen geneigte Rutschstange (9) zum rutschenden Fördern längs eines Förderwegs in einer zu einer Rutschstangenlängsachse (10) parallelen Förderrichtung (5) mehrerer hängender Fördergüter (6), die jeweils mittels eines Hakens (12) an der Rutschstange (9) aufgehängt sind, und
b) ein Stopperelement (13) im Förderweg am Ende zumindest eines Abschnitts der Rutschstange (9) zum Stoppen der Fördergüter (6) unter Bildung einer Fördergutgruppe (7),
wobei das Stopperelement (13) eine zwischen einer Stopperanordnung zum Stoppen der Fördergüter (6) und einer Passieranordnung zum Durchlassen der Fördergüter (6) verlagerbare Anlagefläche (14) für die Fördergüter (6) aufweist,
**dadurch gekennzeichnet, dass**
ausschließlich das Stopperelement (13) zum Stoppen der Fördergüter (6) dient.

2. Staustrecke gemäß Anspruch 1, **dadurch gekennzeichnet, dass** die Anlagefläche (14) in der Stopperanordnung quer zur Förderrichtung (5) und insbesondere vertikal orientiert ist.

3. Staustrecke gemäß einem der vorstehenden Ansprüche, **dadurch gekennzeichnet, dass** das Stopperelement (13) eine um eine, insbesondere vertikal orientierte, Schwenkachse (20) schwenkbare Tür ist.

4. Staustrecke gemäß einem der vorstehenden Ansprüche, **dadurch gekennzeichnet, dass** das Stopperelement (13) beabstandet von der Rutschstange (9) angeordnet ist.

5. Staustrecke gemäß einem der vorstehenden Ansprüche, **gekennzeichnet durch** ein Antriebselement (11) zum Antreiben der Rutschstange (9).

6. Staustrecke gemäß Anspruch 5, **dadurch gekennzeichnet, dass** das Antriebselement (11) derart wirkt, dass ein Reibkoeffizient zwischen der Rutschstange (9) und den Fördergütern (6) reduziert ist, wobei insbesondere das Antriebselement (11) als Drehantrieb oder als Schwingungsantrieb ausgeführt ist.

7. Staustrecke gemäß einem der vorstehenden Ansprüche, **dadurch gekennzeichnet, dass** das Stopperelement (13) in der Stopperanordnung, insbesondere mechanisch, verriegelt ist.

8. Staustrecke gemäß einem der vorstehenden Ansprüche, **gekennzeichnet durch** eine Vermessungseinheit (15) zum Vermessen der Länge der Fördergutgruppe (7) entlang der Rutschstangenlängsachse (10).

9. Staustrecke gemäß Anspruch 8, **dadurch gekennzeichnet, dass** die Vermessungseinheit (15) eine Zähleinheit zum Zählen der Anzahl der Fördergüter (6) je Fördergutgruppe (7) aufweist.

10. Staustrecke gemäß Anspruch 8 oder 9, **dadurch gekennzeichnet, dass** die Vermessungseinheit (15) eine Identifiziereinheit zum Identifizieren der Fördergüter (6) aufweist.

11. Staustrecke gemäß Anspruch 8, **dadurch gekennzeichnet, dass** die Vermessungseinheit (15) einen mit einer Steuereinheit (16) in Signalverbindung stehenden Sensor zum Erkennen einer Länge der Warengruppe (7) aufweist.

12. Staustrecke gemäß einem der vorstehenden Ansprüche, **dadurch gekennzeichnet, dass** ein Neigungswinkel zwischen 2° und 20°, insbesondere zwischen 2° und 16°, insbesondere zwischen 5° und 15° und insbesondere zwischen 8° und 12° beträgt.

13. Staustrecke gemäß einem der vorstehenden Ansprüche, **dadurch gekennzeichnet, dass** das Stopperelement (13) in der Stopperanordnung eine entgegen der Förderrichtung (5) orientierte Schließkraft von mindestens 80 N, insbesondere von mindestens 100 N und insbesondere in einem Bereich von 100 N bis 150 N aufweist.

14. Förderanlage für hängendes Fördergut (6) in einem Hochregallager mit
a) einer Staustrecke (4) gemäß einem der vorstehenden Ansprüche,
b) einer mit der Rutschstange (9) verbundenen Zuführstange (2) zum Zuführen der Fördergüter (6) und
c) einer mit der Rutschstange (9) verbundenen Abführstange (3) zum Abführen der innerhalb der Staustrecke (4) zu einer Fördergutgruppe (7) gestauten Fördergüter (6).

15. Förderanlage gemäß Anspruch 14, **gekennzeichnet durch** eine Mitnehmereinheit (17) zum Mitnehmen der Fördergutgruppe (7) von der Rutschstange (9) der Staustrecke (4) zu der Abführstange (3).

## Claims

1. Buffer section for a conveying system in a high rack warehouse, wherein the buffer section (4) comprises
a) a slide rod (9) inclined relative to the horizontal for sliding conveyance along a conveying path in a conveying direction (5), which is parallel to a slide rod longitudinal axis (10), of a plurality of suspended conveyed goods (6), which are in each case suspended by means of a hook (12) on the slide rod (9), and
b) a stopper element (13) in the conveying path at the end of at least one portion of the slide rod (9) to stop the conveyed goods (6) with the formation of a group (7) of conveyed goods,
wherein the stopper element (13) has a contact face (14), which can be displaced between a stopper arrangement to stop the conveyed goods (6) and a passing arrangement for allowing the conveyed goods (6) through, for the conveyed goods (6),
**characterized in that** exclusively the stopper element (13) is used to stop the conveyed goods (6).

2. Buffer section according to claim 1, **characterized in that** the contact face (14) in the stopper arrangement is oriented transverse to the conveying direction (5), in particular the contact face (14) is oriented vertically.

3. Buffer section according to any one of the preceding claims, **characterized in that** the stopper element (13) is a door, which is pivotable about a pivot axis (20) that is, in particular, vertically oriented.

4. Buffer section according to any one of the preceding claims, **characterized in that** the stopper element (13) is arranged spaced apart from the slide rod (9).

5. Buffer section according to any one of the preceding claims, **characterized by** a drive element (11) for driving the slide rod (9).

6. Buffer section according to claim 5, **characterized in that** the drive element (11) acts in such a way that a coefficient of friction between the slide rod (9) and the conveyed goods (6) is reduced, wherein the drive element (11) in particular is configured as a rotary drive or as an oscillating drive.

7. Buffer section according to any one of the preceding claims, **characterized in that** the stopper element (13) is locked, in particular mechanically, in the stopper arrangement.

8. Buffer section according to any one of the preceding claims, **characterized by** a measuring unit (15) for measuring the length of the group (7) of conveyed goods along the slide rod longitudinal axis (10).

9. Buffer section according to claim 8, **characterized in that** the measuring unit (15) has a counting unit to count the number of conveyed goods (6) per group (7) of conveyed goods.

10. Buffer section according to claim 8 or 9, **characterized in that** the measuring unit (15) has an identifying unit to identify the conveyed goods (6).

11. Buffer section according to claim 8, **characterized in that** the measuring unit (15) has a sensor being in signal connection to a control unit (16) to detect a length of the group (7) of products.

12. Buffer section according to any one of the preceding claims, **characterized in that** an angle of inclination is between 2° and 20°, in particular between 2° and 16°, in particular between 5° and 15° and in particular between 8° and 12°.

13. Buffer section according to any one of the preceding claims, **characterized in that** the stopper element (13) in the stopper arrangement has a closing force oriented counter to the conveying direction (5) of at least 80 N, in particular at least 100 N and in particular in a range from 100 N to 150 N.

14. Conveying system for suspended conveyed goods (6) in a high rack warehouse with
a) a buffer section (4) according to any one of the preceding claims,
b) a feed rod (2) connected to the slide rod (9) to feed the conveyed goods (6) and
c) a discharge rod (3) connected to the slide rod (9) to discharge the conveyed goods (6) backed up within the buffer section (4) to form a group (7) of conveyed goods.

15. Conveying system according to claim 14, **characterized by** a catch unit (17) to catch the group (7) of conveyed goods from the slide rod (9) of the buffer section (4) to the discharge rod (3).

## Revendications

1. Zone d'accumulation pour une installation de transport dans un magasin de stockage en hauteur, la zone d'accumulation (4) comprenant
a) un toboggan (9), incliné par rapport à la direction horizontale, pour le transport par glissement le long d'un trajet de transport dans une direction de transport (5), parallèle à un axe longitudinal (10) de toboggan, de plusieurs objets à transporter (6) suspendus, qui sont, chacun, suspendu au moyen d'un crochet (12), et
b) un élément de butée (13) sur le trajet de transport à l'extrémité d'au moins une portion du toboggan (9) pour l'arrêt des objets à transporter (6), afin de constituer un groupe (7) d'objets à transporter,
l'élément de butée (13) présentant une surface d'appui (14) pour les objets à transporter (6) pouvant être déplacée entre un arrangement de butée, pour l'arrêt des objets à transporter (6), et un arrangement pour le passage pour laisser passer les objets à transporter (6),
**caractérisée en ce que**
l'élément de butée (13) sert exclusivement à arrêter les objets à transporter (6).

2. Zone d'accumulation selon la revendication 1, **caractérisée en ce que** la surface d'appui (14) est orientée perpendiculairement, en particulier, verticalement, par rapport à la direction de transport (5) dans l'arrangement de butée.

3. Zone d'accumulation selon l'une des revendications précédentes, **caractérisée en ce que** l'élément de butée (13) est une porte pouvant être pivotée autour d'un axe de pivotement (20), orientée en particulier verticalement.

4. Zone d'accumulation selon l'une des revendications précédentes, **caractérisée en ce que** l'élément de butée (13) est disposé à distance du toboggan (9).

5. Zone d'accumulation selon l'une des revendications précédentes, **caractérisée par** un élément d'entraînement (11) pour l'entraînement du toboggan (9).

6. Zone d'accumulation selon la revendication 5, **caractérisée en ce que** l'élément d'entraînement (11) agit de telle sorte que le coefficient de frottement entre le toboggan (9) et les objets à transporter (6) est réduit, l'élément d'entraînement (11) étant en particulier conçu sous la forme d'un entraînement en rotation ou d'un entraînement à oscillation.

7. Zone d'accumulation selon l'une des revendications précédentes, **caractérisée en ce que** l'élément de butée (13) est verrouillé dans l'arrangement de butée, notamment de manière mécanique.

8. Zone d'accumulation selon l'une des revendications précédentes, **caractérisée par** une unité de mesures dimensionnelles (15) pour la mesure de la longueur du groupe (7) de produits à transporter le long de l'axe longitudinal (10) de toboggan.

9. Zone d'accumulation selon la revendication 8, **caractérisée en ce que** l'unité de mesures dimensionnelles (15) présente une unité de comptage pour le comptage du nombre d'objets à transporter (6) par groupe (7) d'objets à transporter.

10. Zone d'accumulation selon les revendications 8 ou 9, **caractérisée en ce que** l'unité de mesures dimensionnelles (15) présente une unité d'identification pour l'identification des objets à transporter (6).

11. Zone d'accumulation selon la revendication 8, **caractérisée en ce que** l'unité de mesures dimensionnelles (15) présente un capteur étant en liaison par signal avec une unité de commande (16) pour la reconnaissance de la longueur du groupe (7) d'articles.

12. Zone d'accumulation selon l'une des revendications précédentes, **caractérisée en ce qu'**un angle d'inclinaison possède une valeur entre 2 ° et 20 °, notamment entre 2 ° et 16 °, en particulier, entre 5 ° et 15 ° et particulièrement entre 8 ° et 12 °.

13. Zone d'accumulation selon l'une des revendications précédentes, **caractérisée en ce que** l'élément de butée (13) dans l'arrangement de butée présente une force de fermeture orientée opposée à la direction de transport (5) d'au moins 80 N, notamment, d'au moins 100 N et en particulier, dans un intervalle de 100 N jusqu'à 150 N.

14. Installation de transport pour des objets à transporter (6) suspendus dans un magasin de stockage en hauteur comprenant
a) une zone d'accumulation (4) selon l'une des revendications précédentes,
b) une tringle d'amenée (2) reliée avec le toboggan (9) pour l'approvisionnement en objets à transporter (6) et
c) une tringle d'évacuation (3) reliée avec le toboggan (9) pour l'évacuation des objets à transporter (6) stockés sous la forme d'un groupe (7) d'objets à transporter dans la zone d'accumulation (4).

15. Installation de transport selon la revendication 14 **caractérisée par** une unité entraînante (17) pour emmener le groupe (7) d'objets à transporter du toboggan (9) de la zone d'accumulation (4) vers la tringle d'évacuation (3).
